# EUROPÄISCHE PATENTSCHRIFT

(11) **EP 2 913 226 B1**
(45) Veröffentlichungstag und Bekanntmachung des Hinweises auf die Patenterteilung: **29.05.2019**
(21) Anmeldenummer: 14004347.2
(22) Anmeldetag: 20.12.2014
(51) Int. Cl.: B60N 3/10

(54) **Modulares Haltesystem für Fahrzeuge, insbesondere für Kraftfahrzeuge**
Modular retaining system for vehicles, in particular for motor vehicles
Système de retenue modulaire pour véhicules, en particulier pour véhicules automobiles

(30) Priorität: 27.02.2014 DE 102014002929
(43) Veröffentlichungstag der Anmeldung: 02.09.2015
(73) Patentinhaber: MAN Truck & Bus AG, 80995 München (DE)
(72) Erfinder: Kupitza, Rudolf, 82275 Emmering (DE)
(74) Vertreter: Liebl, Thomas

(56) Entgegenhaltungen:
- DE-A1-102011 119 419
- DE-U1-202007 012 617
- DE-U1-202007 014 373

## Beschreibung

Die Erfindung betrifft ein modulares Haltesystem für Fahrzeuge, insbesondere für Kraftfahrzeuge, nach dem Oberbegriff des Patentanspruches 1 und ein Fahrzeug, insbesondere ein Nutzfahrzeug, mit einem derartigen modularen Haltesystem nach Patentanspruch 14.

Bei vielen Fahrzeugen ist es üblich, dass Getränkehalter bzw. sogenannte Cupholder vorgesehen sind, mittels denen mit Getränken gefüllte Getränkebehälter im Fahrzeug fixiert werden können. Mittels derartiger Cupholder kann ein Getränkebehälter in dem Fahrzeug abgestellt und gehaltert werden.

Aus der DE 20 2008 005 777 U1 ist ein Getränkehalter für Fahrzeuge bekannt, der eine Adapterfunktion aufweist. An diesem Getränkehalter ist ein Adapterfuß vorgesehen, der in einem bereits vorhandenen Getränkehalter oder in ein Ablagefach eines Fahrzeugs eingesetzt werden kann. Zudem weist der Getränkehalter ein Kopfstück mit zwei oder mehreren Aufnahmebereichen für Trinkgefäße auf. Auf diese Weise kann beispielsweise ein bereits vorhandener Getränkehalter eines Fahrzeuges, mittels dem ein einzelnes Trinkgefäß gehaltert werden kann, derart erweitert werden, dass zwei oder mehrere Trinkgefäße gehaltert werden können. Des Weiteren können die Aufnahmebereiche des Getränkehalters auch Halterungen oder Vertiefungen aufweisen, mittels denen beispielsweise elektrische Geräte wie Mobiltelefone oder Taschen-PCs gehaltert werden können.

Das Dokument DE102011119419A offenbart ein modulares Haltesystem für Fahrzeuge.

Aufgabe der Erfindung ist es, ein modulares Haltesystem für Fahrzeuge, insbesondere für Kraftfahrzeuge, und ein Fahrzeug, insbesondere ein Nutzfahrzeug, mit dem modularen Haltesystem bereitzustellen, mittels denen auf einfache Weise eine erhöhte Funktionalität und/oder eine erhöhte Variabilität erreicht wird.

Die Erfindung betrifft ein modulares Haltesystem für Fahrzeuge, insbesondere für Kraftfahrzeuge, mit einer wenigstens eine Aufnahme, insbesondere für ein Behältnis, aufweisenden Haltevorrichtung, insbesondere einem Cupholder, und mit einem in die Aufnahme der Haltevorrichtung einsetzbaren Adapterelement zur Halterung wenigstens eines elektrischen Geräts. Erfindungsgemäß weist die Aufnahme wenigstens ein, von einer elektrischen Energiequelle gespeistes Kontaktelement auf, das bei in die Aufnahme eingesetztem Adapter mit einem dem Kontaktelement zugeordneten Gegenkontaktelement des Adapterelements energieübertragend, insbesondere stromleitend, verbunden ist, wobei das Adapterelement wiederum mit dem wenigstens einen elektrischen Gerät energieübertragend, insbesondere stromleitend, verbunden werden kann, und die Aufnahme wenigstens ein Leuchtelement aufweist.

Mit einem derartigen Haltesystem wird die Funktionalität der Haltevorrichtung auf einfache Weise deutlich erhöht, da das wenigstens eine von der Haltevorrichtung gehalterte elektrische Gerät nun auch mit elektrischer Energie aus der Energiequelle versorgt werden kann. So kann das elektrische Gerät einfach aufgeladen oder betrieben werden, wenn es in dem Adapterelement gehaltert ist. Zudem wird dadurch auch die Variabilität der Haltevorrichtung deutlich erhöht, da diese nicht nur zur Halterung von Gegenständen, sondern wie eben geschildert zum Beispiel auch als Ladestation verwendet werden kann.

Die erfindungsgemäße Haltevorrichtung ist dabei derart gestaltet, dass definierte Gegenstände in dessen Aufnahme eingesetzt bzw. gehaltert werden können. Bei den definierten Gegenständen kann es sich vorzugsweise um Getränkebehälter handeln, das heißt, dass die Haltevorrichtung als Getränkehalter bzw. Cupholder ausgebildet ist. Jedoch sei hier noch einmal ausdrücklich erwähnt, dass dieser Gegenstand kein Getränkebehälter sein muss. Es kann sich auch um jegliche andere definierten Gegenstände handeln, die analog zu einem Behältnis in bzw. an der Haltevorrichtung gehaltert werden können.

Bevorzugt kann die Energiequelle eine Fahrzeugbatterie und/oder ein elektrischer Generator des Fahrzeuges sein. Dadurch kann eine bereits vorhandene Energiequelle des Fahrzeuges zur Speisung des wenigstens einen Kontaktelements der Aufnahme verwendet werden. Es muss daher keine zusätzliche Energiequelle vorgesehen werden.

In einer besonders bevorzugten Ausführung können das wenigstens eine aufnahmeseitige Kontaktelement und das diesem zugeordnete adapterseitige Gegenkontaktelement derart angeordnet und/oder ausgebildet sein, dass diese bei in die Aufnahme eingesetztem Adapterelement unmittelbar aneinander anliegen. Auf diese Weise kann die energieübertragende Verbindung von Aufnahme und Adapterelement auf einfache und zuverlässige Weise hergestellt werden. Zudem kann diese energieübertragende Verbindung auch auf einfach Weise wieder getrennt werden.

In einer konkreten Ausführungsform kann die Aufnahme durch einen offenen oder geschlossenen, insbesondere kreisringförmigen, Haltering oder eine Ausnehmung (zum Beispiel mit Boden) gebildet sein , in die das Adapterelement einsetzbar ist. Auf diese Weise ist die Aufnahme besonders einfach und zuverlässig ausgebildet.

In einer bevorzugten Ausführung können die Aufnahme und das Adapterelement mittels einer Formschluss- und/oder Kraftschlussverbindung lösbar verbunden sein, insbesondere die Aufnahme und/oder das Adapterelement einen, eine Verklemmung zwischen Aufnahme und Adapterelement bewirkenden, sich vorzugsweise konischen verjüngenden Klemmbereich aufweisen. So ist es ermöglicht, das Adapterelement zuverlässig in einer definierten Position zu haltern. Die Verklemmung kann aber auch durch wenigstens eine federbeaufschlagte, verlagerbare Rastnase oder dergleichen Maßnahmen ausgebildet sein, um nur ein weiteres Beispiel zu nennen.

In einer bevorzugten Ausführungsform des modularen Haltesystems kann das wenigstens eine aufnahmeseitige Kontaktelement durch einen in eine Innenwand der Aufnahme eingesetzten und/oder integrierten Stromleiter gebildet sein, dem ein in eine Außenwand des Adapterelements eingesetzter und/oder integrierter Stromübergabering als adapterelementseitiges Gegenkontaktelement zugeordnet ist. Auf diese Weise kann die energieübertragende Verbindung zwischen Kontaktelement und Gegenkontaktelement einfach und zuverlässig realisiert werden.

Bevorzugt kann sich das wenigstens eine aufnahmeseitige Kontaktelement wenigstens bereichsweise und/oder ringförmig, insbesondere kreisringförmig, entlang der Innenwand der Aufnahme erstrecken. Auf diese Weise wird auf einfache Weise sichergestellt, dass bei in die Aufnahme eingesetztem Adapterelement eine energieübertragende Verbindung zwischen dem wenigstens einen Kontaktelement und dem zugeordneten Gegenkontaktelement in möglichst jeder Position hergestellt wird. Hierzu ist es dann besonders vorteilhaft, wenn sich auch das adapterelementseitiges Gegenkontaktelement wenigstens bereichsweise und/oder ringförmig, insbesondere kreisringförmig, entlang der Außenwand des Adapterelements erstreckt.

Erfindungsgemäss weist die wenigstens eine Aufnahme wenigstens ein Leuchtelement auf. Mittels eines derartigen Leuchtelements kann einem Nutzer der Haltevorrichtung, insbesondere bei Dunkelheit, die Position der Aufnahme zuverlässig angezeigt werden.

Bevorzugt kann sich das wenigstens eine Leuchtelement wenigstens bereichsweise und/oder ringförmig, insbesondere kreisringförmig, entlang der Innenwand der Aufnahme erstrecken. Weiter bevorzugt kann das Leuchtelement, in Hochachsenrichtung gesehen, beabstandet oberhalb oder unterhalb des zuvor bereits beschriebenen Stromleiters angeordnet sein. Damit ergibt sich eine designtechnisch hochwertige Ausgestaltung, die höchsten Anforderung an hochwertige Fahrzeugausstattungen genügt. Mittels einer derartigen Erstreckung und/oder einer derartigen Anordnung kann dem Nutzer zudem besonders zuverlässig angezeigt werden, wo sich die wenigstens eine Aufnahme der Haltevorrichtung befindet.

Weiterhin kann das Adapterelement wenigstens ein Verbindungselement, insbesondere wenigstens eine Ladestelle bzw. Ladestätte, aufweisen, da es zur Herstellung einer energieübertragenden Verbindung zwischen dem Adapterelement und dem wenigstens einen elektrischen Gerät mit einem korrespondierenden Verbindungselement, insbesondere einer Ladebuchse, des wenigstens einen elektrischen Geräts lösbar verbunden werden. So kann die energieübertragende Verbindung zwischen dem Adapterelement und dem wenigstens einen elektrischen Gerät auf besonders einfache Weise hergestellt werden.

In einer besonders bevorzugten Ausführungsform kann das Adapterelement derart ausgebildet sein, dass an und/oder mittels diesem wenigstens einen Tablet-PC und/oder wenigstens ein Mobiltelefon, insbesondere ein Smartphone, gehaltert werden kann. Auf diese Weise kann der wenigstens eine Tablet-PC und/oder das wenigstens eine Mobiltelefon mittels der Haltevorrichtung gehaltert und mit elektrischer Energie aus der elektrischen Energiequelle versorgt werden. Dies ist beispielsweise dann vorteilhaft, wenn der wenigstens eine Tablet-PC und/oder das wenigstens eine Mobiltelefon zur Fahrzeugnavigation verwendet wird.

In einer Ausführung kann die Haltevorrichtung mehrere voneinander beabstandete Aufnahmen aufweist, wobei bevorzugt vorgesehen ist, dass die Haltevorrichtung durch ein plattenförmiges Bauteil gebildet ist, in dem mehrere voneinander beabstandete Aufnahmen angeordnet sind. So kann ein Nutzer der Haltevorrichtung auf mehrere Aufnahmen zugreifen. Ein derartiges plattenförmiges Bauteil kann beispielsweise eine Tischplatte sein. Diese Tischplatte kann zum Beispiel ortsfest angeordnet sein. In Verbindung mit Fahrzeugen ist jedoch eine zwischen einer Verstauposition und einer Gebrauchsposition verlagerbare Tischplatte besonders vorteilhaft, zum Beispiel eine schubladenartig ausziehbare Tischplatte oder eine schwenkbar gelagerte Tischplatte.

Ferner wird ein Fahrzeug, insbesondere ein Nutzfahrzeug, mit dem modularen Haltesystem beansprucht. Hier ergeben sich prinzipiell die gleichen Vorteile wie bereits oben erwähnt.

In einer bevorzugten Ausführung des erfindungsgemäßen Fahrzeuges kann das modulare Haltesystem in einem Fahrzeug-Innenraum angeordnet sein, insbesondere an einer Instrumententafel und/oder im Bereich einer Schlafliege. Auf diese Weise kann das modulare Haltesystem durch einen sich innerhalb des Fahrzeuges befindlichen Fahrzeugnutzer verwendet werden.

Alternativ und/oder zusätzlich kann das modulare Haltesystem von einer Fahrzeugaußenseite her zugänglich am Fahrzeug angeordnet sein, insbesondere in einem durch eine Klappe, bevorzugt durch eine Frontklappe, abdeckbaren Stauraum und/oder im Bereich eins Frontaufstiegs angeordnet ist. Dadurch ist es auch ermöglicht, das modulare Haltesystem zu nutzen, wenn man sich außerhalb des Fahrzeuges befindet.

Bevorzugt ist die Halteeinrichtung ortsfest und/oder stationär an dem Fahrzeug festgelegt. Dadurch kann die Haltevorrichtung auf einfache Weise unverlierbar gehaltert werden.

Alternativ und/oder zusätzlich kann die Halteeinrichtung von einer Gebrauchsposition in eine Nicht-Gebrauchsposition und umgekehrt verlagerbar sein, wobei in der Gebrauchsposition wenigstens ein Adapterelement in die wenigstens eine Aufnahme der Haltevorrichtungen einsetzbar ist.. Auf diese Weise ist die Halteeinrichtung besonders flexibel, da sie je nach Bedarf in die Gebrauchsposition oder in die Nicht-Gebrauchsposition gebracht werden kann.

Besonders bevorzugt kann hier zudem vorgesehen sein, dass die Halteeinrichtung in der Nicht-Gebrauchsposition in einer Ausnehmung des Fahrzeuges aufgenommen und/oder angeordnet ist Im verstauten Zustand nimmt sie dann keinen Platz ein, so dass eine derartige Lösung insbesondere bei beengten Platzverhältnissen vorteilhaft ist.
- Fig. 1: in einer Perspektivdarstellung eine erste Ausführungsform einer erfindungsgemäßen modularen Haltesystems mit einer beispielhaft als Cupholder ausgebildeten Haltevorrichtung in der Gebrauchsposition;
- Fig. 2: der Cupholder gemäß Fig. 1 in der Nicht-Gebrauchsposition;
- Fig. 3: der Cupholder gemäß Fig. 1 mit einem eingesetzten Getränkebehälter;
- Fig. 4: in einer Perspektivdarstellung eine erste Ausführungsform eines Adapterelements;
- Fig. 5: in einer Perspektivdarstellung eine zweite Ausführungsform eines Adapterelements;
- Fig. 6: das Adapterelement gemäß Fig. 5 mit einem daran gehalterten Tablet-PC;
- Fig. 7: in einer Perspektivdarstellung eine zweite Ausführungsform eines erfindungsgemäßen Haltesystems mit einem Cupholder;
- Fig. 8: in einer Perspektivdarstellung eine dritte Ausführungsform eines erfindungsgemäßen Haltesystems mit einem Cupholder in der Gebrauchsposition;
- Fig. 9: den Cupholder gemäß Fig. 8 in einer Nicht-Gebrauchsposition;
- Fig. 10: eine Anordnung mehrerer Cupholder;
- Fig. 11: eine Weiterbildung der dritten Ausführungsform;
- Fig. 12: in einer Perspektivdarstellung einen Innenraum eines Fahrzeuges mit mehreren Cupholdern;
- Fig. 13: in einer Perspektivdarstellung einen Schlafbereich eines Lastkraftwagens mit mehreren Cupholdern; und
- Fig. 14: in einer Perspektivdarstellung einen Lastkraftwagen mit einem frontseitigen Aufnahmeraum zur Aufnahme mehrerer Cupholder.

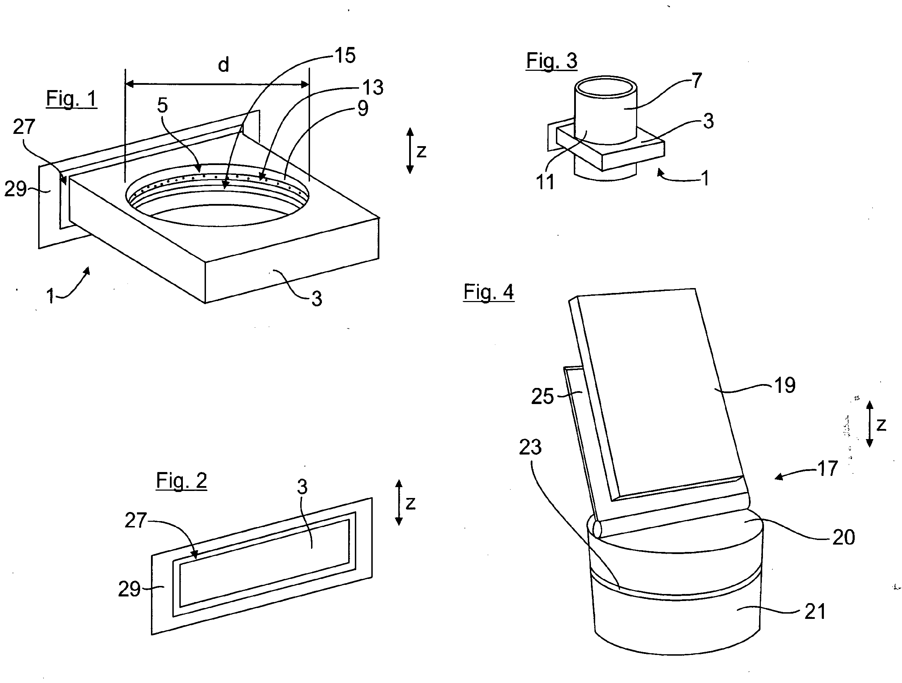

In Fig. 1 ist ein an einem Fahrzeug montiertes modulares Haltesystem mit einem Cupholder 1 in einer ersten Ausführungsform gezeigt. Der Cupholder 1 weist einen quaderförmigen, horizontal ausgerichteten Aufnahmekörper 3 mit einer zentral angeordneten kreisförmigen Ausnehmung 5 auf und bildet somit einen Haltering aus. Ein Durchmesser d der Ausnehmung 5 ist dabei derart ausgebildet, dass ein Getränkebehälter 7 (Fig. 3) in die Ausnehmung 5 eingesetzt werden kann. Eine die Ausnehmung 5 radial begrenzende Innenwandung 9 des Aufnahmekörpers 3 und/oder eine Außenwandung 11 des Getränkebehälters 7, könnten zum Beispiel in Hochachsenrichtung z gesehen, konisch mit nach unten verjüngendem Querschnitt ausgebildet sein, wodurch der Getränkebehälter 7 im eingesetzten Zustand in einer besonders bevorzugten Anlageverbindung mit dem Aufnahmekörper 3 gehaltert werden kann.

In Fig. 1 ist der Cupholder 1 in einer Gebrauchsposition gezeigt, in der der Cupholder 1 aus einer Ausnehmung 27 in einer beliebigen Fahrzeug-Wandung 29 ausgefahren ist. In Fig. 2 ist der Cupholder 1 in einer Nicht-Gebrauchsposition gezeigt, wobei der Aufnahmekörper des Cupholders 1 hier in die Ausnehmung 27 der Fahrzeug-Wandung 29 eingefahren ist bzw. in der Ausnehmung 27 aufgenommen ist. Die Ausnehmung 27 ist vorzugsweise so ausgebildet, dass der Aufnahmekörper 3 in der Nicht-Gebrauchsposition bündig an den umgebenden Wandbereich anschließt.

Wie aus Fig. 1 weiter hervorgeht, ist an der Innenwand 9 des Aufnahmekörpers 3 ein kreisringförmig entlang der Innenwand 9 verlaufendes Leuchtelement 13 äußerlich sichtbar angeordnet, bevorzugt dort integriert. Mittels des Leuchtelements 13 kann einem Nutzer des Cupholders 1, insbesondere bei Dunkelheit, angezeigt werden, wo sich der Cupholder 1 befindet.

Gemäß Fig. 1 weist der Cupholder 1 zudem einen ebenfalls an der Innenwand 9 des Aufnahmekörpers 3 festgelegten, hier kreisringförmig entlang der Innenwand 9 verlaufenden elektrischen Stromleiter 15 auf, der, in Hochachsenrichtung z gesehen, beabstandet zu dem Leuchtelement 13 unterhalb des Leuchtelements 13 angeordnet ist. Das Kontaktelement 15 ist energieübertragend mit einer in den Figuren nicht gezeigtem Energiequelle, beispielsweise einer Fahrzeugbatterie oder einem elektrischer Generator des Fahrzeuges, verbunden.

In Fig. 4 ist ein Adapterelement 17 gezeigt, der in die Ausnehmung 5 des Cupholders 1 eingesetzt werden kann und an dem ein Smartphone 19 gehaltert ist. Das Adapterelement 17 weist einen Basiskörper 21 auf, dessen Außenwand 21 zum Beispiel geometrisch identisch mit der Außenwandung 11 des Getränkebehälters 7 ausgebildet ist, also zum Beispiel konisch um eine sichere Halterung bzw. Verklemmung des Adapterelementes in der Ausnehmung 5 zu erzielen.

An der Außenwand 21 des Basiskörpers 21 und damit des Adapterelementes 17 ist ein zu dem Stromleiter 15 des Cupholders 1 korrespondierender Stromübergabering 23 festgelegt, der ebenso wie der Stromleiter 15 kreisringförmig verläuft. Der Stromübergabering 23 ist dabei derart an dem Basiskörper 20 des Adapters 17 angeordnet, dass der Stromübergabering 23 bei in die Ausnehmung 5 eingesetztem Adapter 17 in Kontakt bzw. Anlage mit dem Stromleiter 15 ist. Auf diese Weise sind der Stromleiter 15 und der Stromübergabering 23 energieübertragend bzw. stromleitend miteinander verbunden, wenn das Adapterelement 17 in die Ausnehmung 5 eingesetzt ist.

Zur Halterung eines Smartphones 19 weist das Adapterelement 17 zum Beispiel eine an dem Basiskörper 20 schwenkbar festgelegte Halteplatte 25 auf (Fig. 4). An der Halteplatte 25 kann das Smartphone 19 beispielsweise mit einer entsprechenden Klemmvorrichtung befestigt werden kann. Des Weiteren weist das Adapterelement 17 einen energieübertragend bzw. stromleitend mit dem Stromübergabering 23 verbundenen, in den Figuren nicht gezeigten Ladestecker auf, der in eine zu dem Ladestecker korrespondierende, ebenfalls in den Figuren nicht gezeigte Ladebuchse des Smartphones 19 gesteckt werden kann. Dadurch kann das Smartphone 19 über den Stromleiter 15, den Stromübergabering 23 und den Ladestecker mit elektrischer Energie aus der mit dem Stromleiter 15 energieübertragend verbundenen Energiequelle versorgt werden.

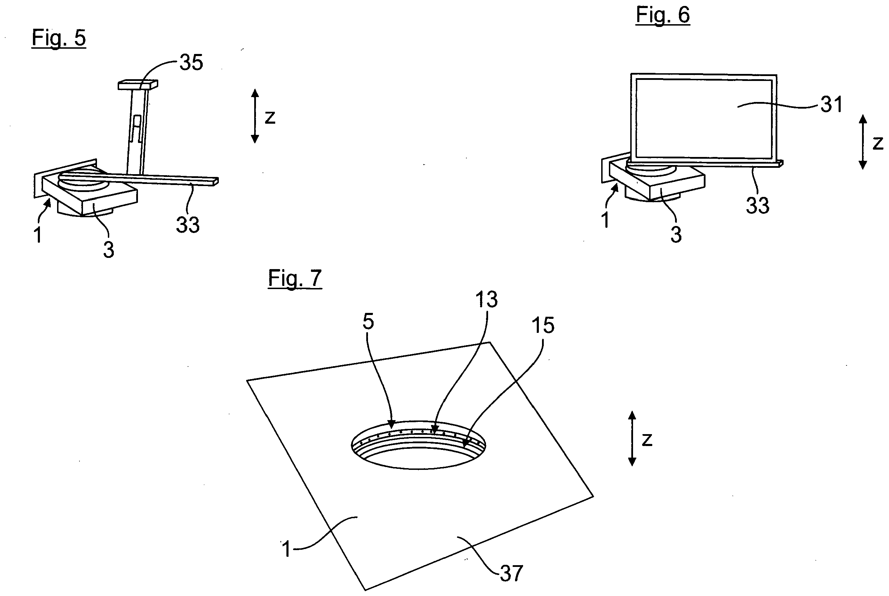

In Fig. 5 ist das Adapterelement 17 in einer zweiten Ausführungsform gezeigt, wobei das Adapterelement 17 hier nicht zur Halterung eines Smartphones 19, sondern zur Halterung eines in Fig. 6 gezeigten Tablet-PCs 31 ausgebildet ist. Gemäß Fig. 5 weist das Adapterelement 17 bzw. dessen Basiskörper nach der zweiten Ausführungsform eine Stützschiene 33 auf, auf der der Tablet-PC 31 abgestellt werden kann. Zudem weist das Adapterelement 17 eine relativ zu der Stützschiene 33 in Hochachsenrichtung z höhenverstellbare Befestigungseinrichtung 35 auf, an der der Tablet-PC 31 festgelegt werden kann. Die Befestigung des Tablet-PCs 31 kann dabei beispielsweise mittels einer geeigneten Klemmvorrichtung erfolgen.

In Fig. 7 ist eine zweite Ausführungsform eines modularen Haltesystems mit einem Cupholder 1 gezeigt. Die Ausnehmung 5 des Cupholders 1 ist hier, im Gegensatz zu der ersten Ausführungsform gemäß Fig. 1, nicht an einem separaten Aufnahmekörper 3, sondern unmittelbar an einer in etwa horizontal verlaufenden Fahrzeug-Wandung 37 ausgebildet. Ansonsten ist der Aufbau und die Funktionsweise jedoch die Gleiche.

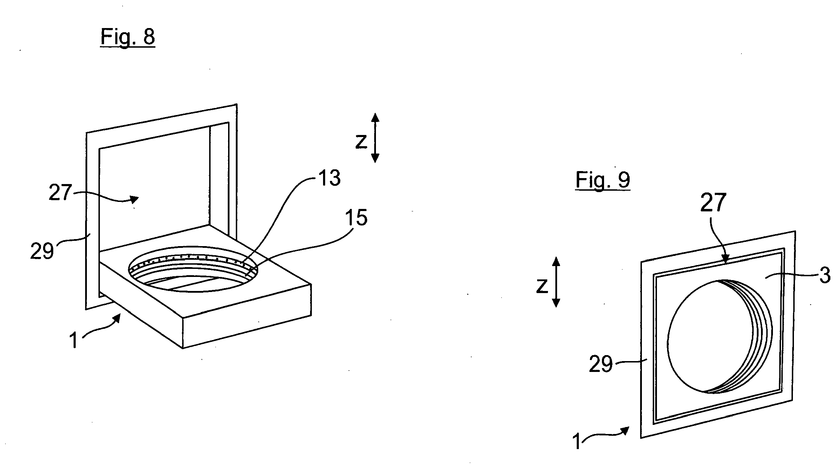

In den Fig. 8 und 9 ist das modulare Haltesystem in einer dritten Ausführungsform gezeigt. Im Gegensatz zu den beiden vorherigen Ausführungsformen gemäß der Fig. 1 und 2 ist die Ausnehmung 27 der Fahrzeug-Wandung 29 hier nicht horizontal, sondern vertikal ausgerichtet. Der einen Haltering ausbildende Aufnahmekörper 3 ist hier daher derart schwenkbar an der Fahrzeug-Wandung 29 festgelegt, dass er, zum Beispiel um 90°, um eine Schwenkachse geklappt bzw. geschwenkt werden kann, um ihn von der Gebrauchsposition in die Nicht-Gebrauchsposition und umgekehrt zu verlagern. Die Ausnehmung 27 ist vorzugsweise so ausgebildet, dass der Aufnahmekörper 3 in der eingeklappten Nicht-Gebrauchsposition bündig an den umgebenden Wandbereich anschließt.

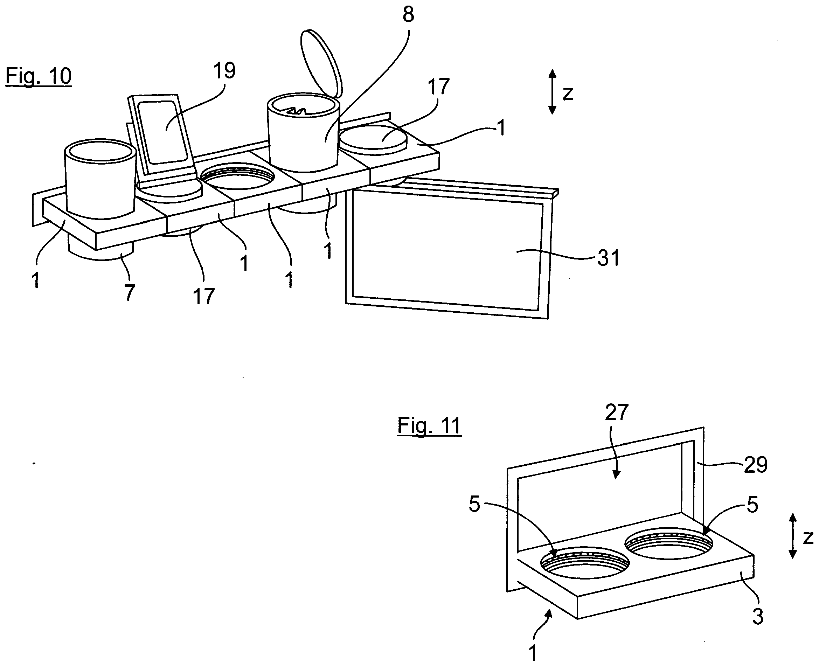

Aus Fig. 10 geht eine vorteilhafte Anordnung mehrerer, zum Teil und unterschiedlich bestückter Cupholder 1 hervor. Die Cupholder 1 sind dabei, in Hochachsenrichtung z gesehen, auf gleicher Höhe und unmittelbar aneinander angrenzend seitlich nebeneinander angeordnet.

In Fig. 11 ist eine Ausführungsform gezeigt, bei der der Aufnahmekörper 3 nicht nur eine Ausnehmung 5, sondern zwei Ausnehmungen 5 aufweist. Auf diese Weise können mittels des Cupholders 1 gemäß Fig. 11 nicht nur ein Adapterelement 17 oder ein Getränkebehälter 7, sondern zwei Getränkebehälter 7, zwei Adapterelemente 17 oder ein Getränkebehälter 7 und ein Adapterelement 17 gehaltert werden. Auch andere Bestückungen können wie vorstehend bereits ausgeführt vorgenommen werden.

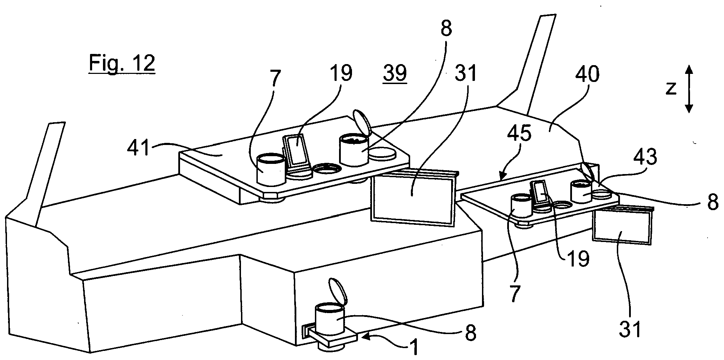

In Fig. 12 ist eine in einem Fahrzeuginnenraum 39 eines Fahrzeuges angeordnete Instrumententafel 40 gezeigt, die mit mehreren unterschiedlich ausgebildeten Cupholdern 1 ausgestattet ist. Der Instrumententafel 40 weist in einem mittleren unteren Bereich einen einzelnen Cupholder 1, darüber eine stationär festgelegte Cupholder-Platte 41 und rechts daneben eine verlagerbar festgelegte Cupholder-Platte 43 auf. Die stationär festgelegte Cupholder-Platte 41 und die verlagerbar festgelegte Cupholder-Platte 43 weisen jeweils mehrere Ausnehmungen 5 auf, in die Getränkebehälter 7 oder Adapterelement 17 eingesetzt werden können. Die verlagerbar festgelegte Cupholder-Platte 43 ist derart verlagerbar festgelegt, dass sie in eine in Fig. 12 gezeigte Gebrauchsposition und in eine Nicht-Gebrauchsposition gebracht werden kann. In der Nicht-Gebrauchsposition ist die verlagerbare Cupholder-Platte 43 (selbstverständlich ohne Adapterelemente 17) in einer Ausnehmung 45 der Instrumententafel 40 aufgenommen.

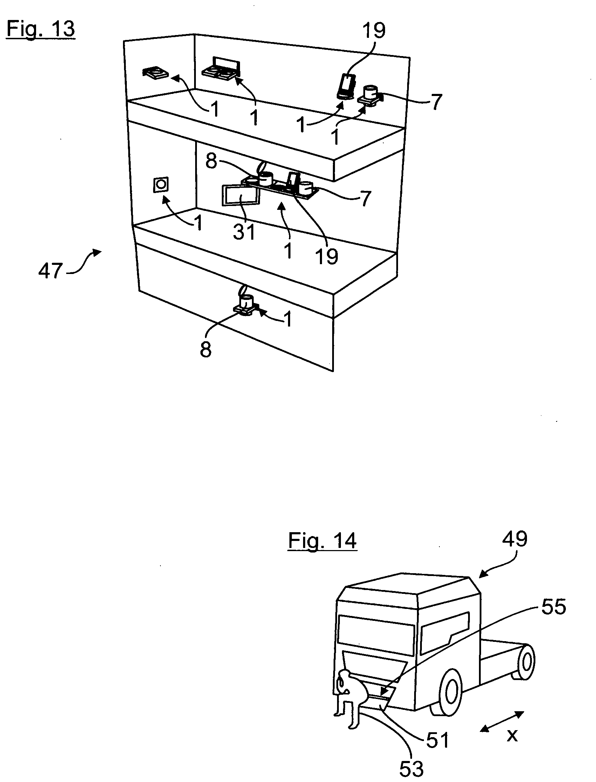

In Fig. 13 ist eine weitere Anordnungsmöglichkeit für Cupholder 1 gezeigt. Gemäß der Fig. 13 sind die Cupholder 1 in einem Schlafliegenbereich 47 eines Lastkraftwagens angeordnet. Die Cupholder 1 sind dabei derart angeordnet, dass die Cupholder 1 für einen Nutzer des Schlafliegenbereichs 47 auf komfortable Weise zugänglich sind.

In Fig. 14 ist ein Lastkraftwagen 49 gezeigt, der, in Fahrzeug-Längsrichtung x gesehen, vorne, eine Klappe 51 aufweist. Diese Klappe 51 bildet zum Beispiel einen Frontaufstieg des Lastkraftwagens 49 aus. In Fig. 14 sitzt eine Person 53 auf der Klappe 51. Mittels der Klappe 51 ist zudem eine Ausnehmung 55 des Lastkraftwagens 49 verschließbar, in der mehrere Cupholder 1 angeordnet sind.

**Bezugszeichenliste**

| | | | |
|---|---|---|---|
| 1 | Cupholder | 39 | Fahrzeug-Innenraum |
| 3 | Aufnahmekörper | 40 | Instrumententafel |
| 5 | Ausnehmung | 41 | stationäre Cupholder-Platte |
| 9 | Innenwand | 43 | verlagerbare Cupholder-Platte |
| 11 | Außenwand | 45 | Ausnehmung |
| 13 | Leuchtelement | 47 | Schlafliegenbereich |
| 15 | Stromleiter | 49 | Lastkraftwagen |
| 17 | Adapter | 51 | Klappe |
| 19 | Smartphone | 53 | Person |
| 20 | Basiskörper | 55 | Ausnehmung Lastkraftwagen |
| 21 | Außenwand | | |
| 23 | Stromübergabering | | |
| 25 | Halteplatte | | |
| 27 | Ausnehmung | | |
| 29 | Fahrzeug-Wandung | | |
| 31 | Tablet-PC | | |
| 33 | Stützschiene | | |
| 35 | Befestigungsvorrichtung | | |
| 37 | horizontale Fahrzeug-Wandung | | |

## Patentansprüche

1. Modulares Haltesystem für Fahrzeuge, mit einer, wenigstens eine Aufnahme (5) aufweisenden Haltevorrichtung (1), und mit einem in die Aufnahme (5) der Haltevorrichtung (1) einsetzbaren Adapterelement (17) zur Halterung wenigstens eines elektrischen Geräts (19, 31), wobei die Aufnahme (5) wenigstens ein, von einer elektrischen Energiequelle gespeistes Kontaktelement (15) aufweist, das bei in die Aufnahme (5) eingesetztem Adapterelement (17) mit einem dem Kontaktelement (15) zugeordneten Gegenkontaktelement (23) des Adapterelements (17) energieübertragend verbunden ist, und wobei das Adapterelement (17) mit dem wenigstens einen elektrischen Gerät (19, 31) energieübertragend verbindbar ist, **dadurch gekennzeichnet, dass** die Aufnahme (5) wenigstens ein Leuchtelement (13) aufweist.

2. Modulares Haltesystem nach Anspruch 1, **dadurch gekennzeichnet, dass** die Energiequelle eine Fahrzeugbatterie und/oder ein elektrischer Generator des Fahrzeuges ist.

3. Modulares Haltesystem nach Anspruch 1 oder 2, **dadurch gekennzeichnet, dass** das wenigstens eine aufnahmeseitige Kontaktelement (15) und das diesem zugeordnete adapterseitige Gegenkontaktelement (23) derart angeordnet und/oder ausgebildet sind, dass diese bei in die Aufnahme (5) eingesetztem Adapterelement (17) unmittelbar aneinander anliegen.

4. Modulares Haltesystem nach einem der vorhergehenden Ansprüche, **dadurch gekennzeichnet, dass** die Aufnahme (5) durch einen offenen oder geschlossenen, insbesondere kreisringförmigen, Haltering oder eine Ausnehmung gebildet, in die das Adapterelement (17) einsetzbar ist.

5. Modulares Haltesystem nach Anspruch 4, **dadurch gekennzeichnet, dass** die Aufnahme (5) und das Adapterelement (17) mittels einer Formschluss- und/oder Kraftschlussverbindung lösbar verbunden sind, insbesondere die Aufnahme (5) und/oder das Adapterelement (17) einen, eine Verklemmung zwischen Aufnahme (5) und Adapterelement (17) bewirkenden, sich vorzugsweise konischen Klemmbereich aufweisen.

6. Modulares Haltesystem nach Anspruch 4 oder 5, **dadurch gekennzeichnet, dass** das wenigstens eine aufnahmeseitige Kontaktelement (15) durch einen in eine Innenwand (9) der Aufnahme (5) eingesetzten und/oder integrierten Stromleiter gebildet ist, dem ein in eine Außenwand (21) des Adapterelements (17) eingesetzter und/oder integrierter Stromübergabering als adapterelementseitiges Gegenkontaktelement (23) zugeordnet ist.

7. Modulares Haltesystem nach einem der vorhergehenden Ansprüche, **dadurch gekennzeichnet, dass** sich das wenigstens eine aufnahmeseitige Kontaktelement (15) wenigstens bereichsweise und/oder ringförmig, insbesondere kreisringförmig, entlang der Innenwand (9) der Aufnahme (5) erstreckt und/oder dass sich das adapterelementseitiges Gegenkontaktelement (23) wenigstens bereichsweise und/oder ringförmig, insbesondere kreisringförmig, entlang der Außenwand (21) des Adapterelements (17) erstreckt.

8. Modulares Haltesystem nach einem der vorhergehenden Ansprüche, **dadurch gekennzeichnet, dass** sich das wenigstens eine Leuchtelement (13) wenigstens bereichsweise und/oder ringförmig, insbesondere kreisringförmig entlang der Innenwand (9) der Aufnahme (5) erstreckt und/oder dass das Leuchtelement (13), in Hochachsenrichtung (z) gesehen, beabstandet oberhalb oder unterhalb des Kontaktelements (15) angeordnet ist.

9. Modulares Haltesystem nach einem der vorhergehenden Ansprüche, **dadurch gekennzeichnet, dass** das Adapterelement (17) wenigstens ein Verbindungselement, insbesondere wenigstens einen Ladestecker, aufweist, das zur Herstellung einer energieübertragenden Verbindung zwischen dem Adapterelement (17) und dem wenigstens einen elektrischen Gerät (19, 31) mit einem korrespondierenden Verbindungselement, insbesondere einer Ladebuchse, des wenigstens einen elektrischen Geräts (19, 31) lösbar verbindbar ist.

10. Modulares Haltesystem nach einem der vorhergehenden Ansprüche, **dadurch gekennzeichnet, dass** das Adapterelement (17) derart ausgebildet ist, dass an und/oder mittels diesem wenigstens ein Tablet-PC (31) und/oder wenigstens ein Mobiltelefon (19), insbesondere ein Smartphone, halterbar ist.

11. Modulares Haltesystem nach einem der vorhergehenden Ansprüche, **dadurch gekennzeichnet, dass** die Haltevorrichtung (1) mehrere voneinander beabstandete Aufnahmen (5) aufweist, wobei bevorzugt vorgesehen ist, dass die Haltevorrichtung (1) durch ein plattenförmiges Bauteil (41, 43) gebildet ist, in dem mehrere voneinander beabstandete Aufnahmen (5) angeordnet sind.

12. Fahrzeug, insbesondere Nutzfahrzeug, mit einem modularen Haltesystem nach einem der vorhergehenden Ansprüche.

13. Fahrzeug nach Anspruch 12, **dadurch gekennzeichnet, dass** das modulare Haltesystem in einem Fahrzeug-Innenraum (39) angeordnet ist, insbesondere an einer Instrumententafel (40) und/oder im Bereich einer Schlafliege (47).

14. Fahrzeug nach Anspruch 12 oder 13, **dadurch gekennzeichnet, dass** das modulare Haltesystem von einer Fahrzeugaußenseite her zugänglich am Fahrzeug (49) angeordnet ist, insbesondere in einem durch eine Klappe (51), bevorzugt durch eine Frontklappe, abdeckbaren Stauraum (55) und/oder im Bereich eins Frontaufstiegs angeordnet ist.

15. Fahrzeug nach einem der Ansprüche 12 bis 14, **dadurch gekennzeichnet, dass** die Haltevorrichtung (1) ortsfest und/oder stationär an dem Fahrzeug festgelegt ist, und/oder dass die Haltevorrichtung (1) von einer Gebrauchsposition in eine Nicht-Gebrauchsposition und umgekehrt verlagerbar ist, wobei in der Gebrauchsposition wenigstens ein Adapterelement (17) in die wenigstens eine Aufnahme (5) der Haltevorrichtungen (1) einsetzbar sind, und wobei die Haltevorrichtung (1) in der Nicht-Gebrauchsposition in einer Ausnehmung (27, 45, 55) des Fahrzeuges aufgenommen und/oder angeordnet ist.

## Claims

1. Modular retaining system for vehicles, having a retaining device (1) comprising at least one receiver (5) and having an adapter element (17) which is able to be inserted into the receiver (5) of the retaining device (1) for retaining at least one electrical device (19, 31), wherein the receiver (5) comprises at least one contact element (15) supplied by an electrical energy source, said contact element being connected to a counter contact element (23) of the adapter element (17) assigned to the contact element (15) in an energy-transmitting manner when the adapter element (17) is inserted into the receiver (5) and wherein the adapter element (17) is able to be connected to the at least one electrical device (19, 31) in an energy-transmitting manner, **characterized in that** the receiver (5) has at least one illuminating element (13).

2. Modular retaining system according to Claim 1, **characterized in that** the energy source is a vehicle battery and/or an electrical generator of the vehicle.

3. Modular retaining system according to Claim 1 or 2, **characterized in that** the at least one contact element (15) on the receiver side and the counter contact element (23) assigned thereto on the adapter side, are arranged and/or configured such that said contact elements bear directly against one another when the adapter element (17) is inserted into the receiver (5).

4. Modular retaining system according to one of the preceding claims, **characterized in that** the receiver (5) is formed by an open or closed, in particular circular, retaining ring or a recess into which the adapter element (17) is able to be inserted.

5. Modular retaining system according to Claim 4, **characterized in that** the receiver (5) and the adapter element (17) are releasably connected by means of a positive and/or non-positive connection, in particular the receiver (5) and/or the adapter element (17) have a preferably conical clamping region effecting a clamping between the receiver (5) and the adapter element (17).

6. Modular retaining system according to Claim 4 or 5, **characterized in that** the at least one contact element (15) on the receiver side is formed by an electrical conductor inserted and/or integrated into an inner wall (9) of the receiver (5), to which a current transmission ring inserted and/or integrated into an outer wall (21) of the adapter element (17) is assigned as a counter contact element (23) on the adapter element side.

7. Modular retaining system according to one of the preceding claims, **characterized in that** the at least one contact element (15) on the receiver side extends at least partially and/or in an annular manner, in particular in a circular manner, along the inner wall (9) of the receiver (5), and/or **in that** the counter contact element (23) on the adapter element side extends at least partially and/or in an annular manner, in particular in a circular manner, along the outer wall (21) of the adapter element (17).

8. Modular retaining system according to one of the preceding claims, **characterized in that** the at least one illuminating element (13) extends at least partially and/or in an annular manner, in particular in a circular manner, along the inner wall (9) of the receiver (5) and/or **in that**, viewed in the direction of the vertical axis (z), the illuminating element (13) is arranged spaced apart above or below the contact element (15).

9. Modular retaining system according to one of the preceding claims, **characterized in that** the adapter element (17) has at least one connecting element, in particular at least one charging plug, which is able to be releasably connected to a corresponding connecting element, in particular a charging socket, of the at least one electrical device (19, 31) for producing an energy-transmitting connection between the adapter element (17) and the at least one electrical device (19, 31).

10. Modular retaining system according to one of the preceding claims, **characterized in that** the adapter element (17) is configured such that at least one tablet PC (31) and/or at least one mobile telephone (19), in particular a smart phone, is able to be retained thereon and/or thereby.

11. Modular retaining system according to one of the preceding claims, **characterized in that** the retaining device (1) has a plurality of receivers (5) spaced apart from one another, wherein it is preferably provided that the retaining device (1) is formed by a plate-shaped component (41, 43) in which a plurality of receivers (5) spaced apart from one another are arranged.

12. Vehicle, in particular utility vehicle, having a modular retaining system according to one of the preceding claims.

13. Vehicle according to Claim 12, **characterized in that** the modular retaining system is arranged in a vehicle interior (39), in particular on an instrument panel (40) and/or in the region of a sleeping area (47).

14. Vehicle according to Claim 12 or 13, **characterized in that** the modular retaining system is arranged on the vehicle (49) so as to be accessible from outside the vehicle, in particular in a storage compartment (55) which is able to be covered by a flap (51), preferably by a front flap, and/or in the region of a front step.

15. Vehicle according to one of Claims 12 to 14, **characterized in that** the retaining device (1) is secured in a fixed and/or stationary manner to the vehicle and/or **in that** the retaining device (1) is able to be displaced from a position of use into a position of non-use and vice versa, wherein in the position of use at least one adapter element (17) is able to be inserted into the at least one receiver (5) of the retaining devices (1) and wherein the retaining device (1) is received and/or arranged in the position of non-use in a recess (27, 45, 55) of the vehicle.

## Revendications

1. Système de retenue modulaire pour véhicules comprenant un dispositif de retenue (1) présentant au moins un logement (5), et comprenant un élément adaptateur (17) pouvant être inséré dans le logement (5) du dispositif de retenue (1) pour retenir au moins un appareil électrique (19, 31), le logement (5) présentant au moins un élément de contact (15) alimenté par une source d'énergie électrique, lequel est connecté, avec transfert d'énergie, à un élément de contact conjugué (23) de l'élément adaptateur (17), associé à l'élément de contact (15), lorsque l'élément adaptateur (17) est inséré dans le logement (5), et l'élément adaptateur (17) pouvant être connecté avec transfert d'énergie à l'au moins un appareil électrique (19, 31) **caractérisé en ce que** le logement (5) présente au moins un élément d'éclairage (13).

2. Système de retenue modulaire selon la revendication 1, **caractérisé en ce que** la source d'énergie est une batterie de véhicule et/ou un générateur électrique du véhicule.

3. Système de retenue modulaire selon la revendication 1 ou 2, **caractérisé en ce que** l'au moins un élément de contact (15) du côté du logement et l'élément de contact conjugué (23) associé à celui-ci, du côté de l'adaptateur, sont disposés et/ou réalisés de telle sorte qu'ils s'appliquent directement l'un contre l'autre lorsque l'élément adaptateur (17) est inséré dans le logement (5).

4. Système de retenue modulaire selon l'une quelconque des revendications précédentes, **caractérisé en ce que** le logement (5) est formé par une bague de retenue ou un évidement ouvert ou fermé, en particulier de forme annulaire circulaire, dans lequel ou laquelle peut être inséré l'élément adaptateur (17).

5. Système de retenue modulaire selon la revendication 4, **caractérisé en ce que** le logement (5) et l'élément adaptateur (17) sont connectés de manière amovible par liaison par engagement par correspondance de formes et/ou par force, en particulier le logement (5) et/ou l'élément adaptateur (17) présentent une région de serrage de préférence conique provoquant un serrage entre le logement (5) et l'élément adaptateur (17).

6. Système de retenue modulaire selon la revendication 4 ou 5, **caractérisé en ce que** l'au moins un élément de contact (15) du côté du logement est formé par un conducteur électrique inséré et/ou intégré dans une paroi intérieure (9) du logement (5), auquel est associée une bague de transmission de courant insérée et/ou intégrée dans une paroi extérieure (21) de l'élément adaptateur (17), en tant qu'élément de contact conjugué (23) du côté de l'élément adaptateur.

7. Système de retenue modulaire selon l'une quelconque des revendications précédentes, **caractérisé en ce que** l'au moins un élément de contact (15) du côté du logement s'étend au moins en partie et/ou sous forme annulaire, en particulier sous forme annulaire circulaire, le long de la paroi intérieure (9) du logement (5) et/ou **en ce que** l'élément de contact conjugué (23) du côté de l'élément adaptateur s'étend au moins en partie et/ou sous forme annulaire, en particulier sous forme annulaire circulaire, le long de la paroi extérieure (21) de l'élément adaptateur (17).

8. Système de retenue modulaire selon l'une quelconque des revendications précédentes, **caractérisé en ce que** l'au moins un élément d'éclairage (13) s'étend au moins en partie et/ou sous forme annulaire, en particulier sous forme annulaire circulaire, le long de la paroi intérieure (9) du logement (5) et/ou **en ce que** l'élément d'éclairage (13), vu dans la direction de l'axe vertical (z), est disposé à distance au-dessus ou en dessous de l'élément de contact (15).

9. Système de retenue modulaire selon l'une quelconque des revendications précédentes, **caractérisé en ce que** l'élément adaptateur (17) présente au moins un élément de liaison, en particulier au moins une prise de charge, qui peut être connecté de manière amovible à un élément de liaison correspondant, en particulier une douille de charge, de l'au moins un appareil électrique (19, 31) pour établir une liaison par transfert d'énergie entre l'élément adaptateur (17) et l'au moins un appareil électrique (19, 31).

10. Système de retenue modulaire selon l'une quelconque des revendications précédentes, **caractérisé en ce que** l'élément adaptateur (17) est réalisé de telle sorte qu'au moins une tablette PC (31) et/ou au moins un téléphone portable (19), en particulier un smartphone, puisse être retenu(e) sur et/ou au moyen de celui-ci.

11. Système de retenue modulaire selon l'une quelconque des revendications précédentes, **caractérisé en ce que** le dispositif de retenue (1) présente plusieurs logements (5) espacés les uns des autres, dans lequel il est de préférence prévu que le dispositif de retenue (1) soit formé par un composant en forme de plaque (41, 43) dans lequel sont disposés plusieurs logements (5) espacés les uns des autres.

12. Véhicule, en particulier véhicule utilitaire comprenant un système de retenue modulaire selon l'une quelconque des revendications précédentes.

13. Véhicule selon la revendication 12, **caractérisé en ce que** le système de retenue modulaire est disposé dans un habitacle de véhicule (39), en particulier sur un tableau de bord (40) et/ou dans la région d'une couchette (47).

14. Véhicule selon la revendication 12 ou 13, **caractérisé en ce que** le système de retenue modulaire est disposé au niveau du véhicule (49) de manière accessible depuis un côté extérieur du véhicule, en particulier dans un espace de rangement (55) pouvant être recouvert par un volet (51), de préférence par un volet avant, et/ou dans la région d'une partie d'accès avant.

15. Véhicule selon l'une quelconque des revendications 12 à 14, **caractérisé en ce que** le dispositif de retenue (1) est monté fixement et/ou de manière stationnaire sur le véhicule, et/ou **en ce que** le dispositif de retenue (1) peut être déplacé d'une position d'utilisation dans une position de non-utilisation et inversement, au moins un élément adaptateur (17) pouvant être inséré dans l'au moins un logement (5) des dispositifs de retenue (1) dans la position d'utilisation, et le dispositif de retenue (1) étant reçu et/ou disposé dans un évidement (27, 45, 55) du véhicule dans la position de non-utilisation.
